# EUROPEAN PATENT APPLICATION

(11) **EP 1 649 974 A1**
(43) Date of publication of application: **26.04.2006**
(21) Application number: 05256478.8
(22) Date of filing: 19.10.2005
(51) Int. Cl.: B23Q 17/24

(54) **Guidance light generating unit for power tool**

(30) Priority: 20.10.2004 GB 0423283
(71) Applicant: GMCA PTY Ltd, Victoria 3045 (AU)
(72) Inventor: Firth, Robert c/o Keith Park Ass. (GMC), York YO42 2QN (GB)
(74) Representative: Wood, Graham

(57) **Abstract**

The invention relates to the provision of a light generating unit which can be used to generate one or more guidance lines, typically via laser generating means (4) mounted within the same. The unit is mounted on a power tool such that the guidance line or lines which are generated, lie at or adjacent to the position of a blade of the power tool when in contact with the work piece so as to provide guidance for the cutting operation. The units are provided with engagement means (20) to allow the unit to be engaged to the power tool at a desired location and in accordance with the invention, once the unit has been secured to the power tool in the required position, an enclosure (32) is provided to fit over the housing of the unit to thereby enclose the engagement means and thereafter prevent access to the same by a user. Thus, the light generating units can be fitted under factory conditions at the required location on the power tool and thereafter cannot be further adjusted while the engagement means are enclosed by the enclosure. It is also possible that adjustment means are provided to allow relative adjustment of the light generating unit and these can also be enclosed within the enclosure to thereby prevent further adjustment by the users.

## Description

The invention to which this application relates is the provision of a means for generating a light guidance line onto a work piece which is to be cut via a power tool, said power tool having a blade which is movable as part of the power tool to perform the cutting operation.

The generation of guidance lines from a power tool onto a work piece to be cut is known and there arc several prior art patents which disclose such systems, The systems can broadly be split into two categories, those which are formed as an integral part of the power tool and those which are fixed as a unit onto a surface of the power tool at a suitable location to generate the guidance lines to the work piece.

In many instances, adjustment means are provided to allow adjustment of the guidance line which is generated with respect to the cutting point. These adjustment means typically include a user operable wheel or other actuator which, when operated causes relative movement between the means used to generate the light and the power tool. While these adjustment means are of some potential use to the user, it is found that in many cases, the same will not be used and therefore represent additional cost to the producer of the apparatus.

The aim of the present invention is to provide a means for generating a guidance line onto a work piece from a power tool and to do so via a unit which, once factory fitted in the correct position, is held in that position and is not capable of being removed, and to allow the provision of a guidance line generating unit which can be manufactured as a separate unit to the power tool and subsequently fixed to the power tool to effectively become an integral part of said power tool.

In a first aspect of the invention, there is provided a power tool with a guidance line generating unit, said unit including a means for generating at least one light therefrom to project at least one guidance line from said unit, a housing in which said light generating means is located and engagement means for allowing said housing to be fixed onto the power tool in a position such that the guidance line is at or adjacent to a blade of the power tool when positioned on a work piece to be cut and wherein said unit includes an enclosure located on the housing once the unit has been fixed to the power tool during factory assembly said enclosure preventing subsequent user access to the engagement means while the unit is intact.

In one embodiment, the light generating means is a laser, said laser provided as a barrel shaped component which is held in a channel in the housing. In one embodiment the channel is provided at an angle with respect to the housing such that when the means is attached to the power tool, the angle at which the guidance line is emitted ensures that the guidance line is generated onto the work piece which is to be cut using the power tool blade.

In one embodiment, once the engagement means have been used to secure the housing to the power tool, the engagement means are encapsulated by a material, such as a potting compound, so as to prevent further adjustment of the engagement means. Furthermore, once the engagement means have been utilised to locate the housing, access to the same is prevented by placement of the enclosure.

In one embodiment the enclosure is in the form of a plate which is located in place over an opening in the housing to enclose the engagement means therein. Typically, the plate is provided with a snap-fit location means such that once the same has been snapped into position, the same cannot easily be removed. Preferably, the external surface of the plate is flush with the portions of the housing adjacent to the opening into the enclosure. In a preferred embodiment, the snap-fit arrangement is tamper evident in that attempts to subsequently remove the plate, cause the failure and/or breakage of the snap-fit location means.

In one embodiment, the housing includes a power source to allow the guidance line to be generated or alternatively, the housing is provided with a cable port to allow the same to be connected to the power supply for the power tool via a cable connection.

In one embodiment, the plate which is used to cover the opening into the enclosure is also used to bear a label or labels, said can labels which provide information about the unit which may include safety information and other information which is required to be provided to the user.

In a preferred embodiment, the label is of a size such that it is applied to lie over at least one of the interfaces between the edge of the plate and the housing around the opening thereby acting as a means for concealing the access means to the screws. In one embodiment the label is also used to provide a tamper evident effect in that if an effort is made to remove the plate once the label has been applied, the label is torn.

In one embodiment, the location means are a series of screws, each of which passes through an aperture in the housing wall and into the power tool body, to secure the housing in position. In one embodiment, the apertures provided for the screws are of a slightly greater dimension than the screw shank so as to allow a degree of tolerance when initially fitting the housing onto the power tool under factory conditions so as to position the housing to allow the generation of a guidance line which is generated at the required position with respect to the cutting blade of the power tool.

In one embodiment, the housing includes a top portion with a channel into which the light generating unit is fitted and retained in a relative angled position with regard to the unit and in a portion below the channel are provided one or more apertures for the reception of the engagement means which serve to engage the unit onto a power tool. In this form, the enclosure is provided of a form such that when the same is attached to the housing, the enclosure forms the front and at least part of the side walls of the lower portion of the unit when fitted to the power tool.

In one embodiment, only a single light is generated therefore providing a single guidance line projected onto a work piece.

In an alternative embodiment, the unit comprises two, spaced, light generating means thereby allowing the generation of two spaced guidance lines onto the work piece. Typically, the first and second guidance lines are generated such that one of the guidance lines lies to one side of a cutting blade of the tool when the blade is brought into contact with the work piece and the other of the guidance lines is generated to lie at the other side of the blade when brought into contact with the work piece.

In one embodiment, the unit incorporates adjustment means which allows the position of one or more light generating means to be adjusted once the unit is fixed to the power tool but prior to the fixing of the enclosure thereover.

In one embodiment, the provision of the adjustment means is of importance with regard to two or more light generating means so as to allow adjustment of one of the light generating means with regard to the position of the other in the unit. In one embodiment, one of the light generating means is fixed in position in the housing and the other is adjustable with respect to the fixed light generating means.

In one embodiment, the adjustment is to allow both the spacing and parallax between the light generating means to be adjusted.

In one embodiment, once the adjustment has taken place, via the adjustment means, the enclosure for the unit is placed onto the housing in a manner so as to enclose the adjustment means and the engagement means and hence prevent further operation of either of the adjustment means and engagement means by the user of the tool. It will therefore be appreciated that the adjustment which does occur has to take place during the factory assembly of the unit and the power tool.

In one embodiment, the enclosure includes a window, typically formed from a portion of clear plastic, through which the lights which are generated are projected and on towards the work piece. Thus, the provision of the window as part of the enclosure ensures that the guidance lines can be generated without user access to the interior of the unit.

In one embodiment, the location means to locate the enclosure with the housing, are formed of a tab with a protruding portion on one of the enclosure or housing and an aperture for reception of same on the other of the enclosure or housing. Typically, the tab is provided with sufficient resilience so as to allow the same to flex as it passes through the opening with the protrusion locating the same in position. It is preferred that the locating means are located with respect to the unit such that the same are difficult to access by a user of the power tool, thereby further minimising the opportunity for the user to gain access to the interior of the unit.

In a further aspect of the invention there is provided a power tool with a guidance line generating unit, said unit fitted to the power tool body in position to allow a guidance line to be generated wherein, once fitted in position, the location means used to engage the unit are masked from user access to prevent adjustment of the position of the unit with the same intact.

In a further aspect of the invention there is provided a light generating unit for generating at least one guidance line said unit including at least one laser generating means for generating at least one laser beam therefrom to project at least one guidance line from said unit, a housing in which said light generating means is located, engagement means for allowing said housing to be fixed onto a power tool and wherein said unit includes an enclosure located on the housing once the unit has been fixed to the power tool to enclose said engagement means within the unit.

Typically the light generating unit includes adjustment means to allow the position of a laser generating means to be adjusted with respect to the housing. Preferably the adjustment means are enclosed within the unit once the enclosure is fitted to the housing.

Typically the engagement means, once enclosed, are not externally accessible. In one embodiment two or more laser generating means are provided in the unit to generate to spaced guidance lines from said unit.

In a yet further aspect of the invention there is provided a method of fitting a light generating unit to a power tool, said method comprising the steps of locating a housing of the unit, which includes one or more light generating means, onto the body of the power tool via engagement means such that the emitted guidance line is at or adjacent to a blade of the power tool when the blade is positioned on the work piece to be cut and wherein once said housing is fitted, attaching an enclosure to the housing to prevent access to the engagement means while the unit is intact on the power tool.

Typically the steps are performed under factory conditions.

The method may, in one embodiment, include using adjustment means to adjust the position of a light generating means with respect to the housing prior to fitting the enclosure to the housing.

Specific embodiments of the invention are now described with reference to the accompanying drawings, wherein:-
Figure 1a illustrates the assembled guidance line generating means in accordance with one embodiment of the invention;

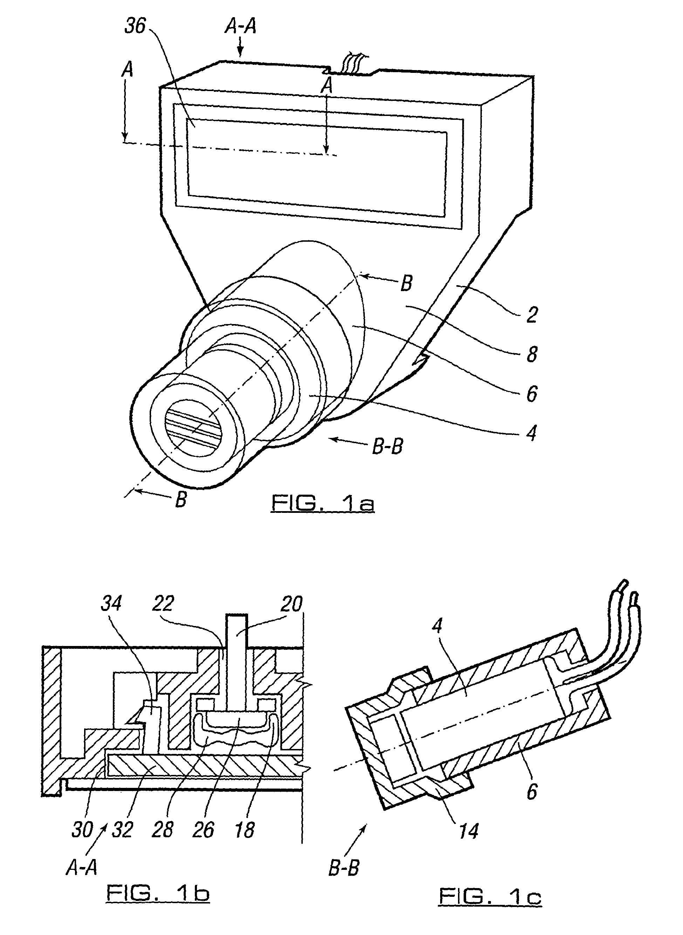

Figure 1b is a sectional elevation along line A-A;
Figure 1 c is a sectional elevation along line B-B; and
Figure 2 illustrates an cxploded diagram of the components of the invention in accordance with the embodiment of Figure 1.
Figure 3a and b illustrate a variation of the light generating unit of Figures 1a to 2,
Figures 3c and d illustrate the light generating unit of Figures 3a and b fitted to a power tool in the form of a mitre saw;
Figures 4a and b illustrate a further embodiment of the invention in component parts and an assembled condition respectively;
Figures 5a and b illustrate a further embodiment of the invention in component and assembled positions respectively; and
Figures 6a and b illustrate a yet further embodiment of the invention in component and assembled positions respectively.

Referring now to the Figures 1a - 2, there is illustrated a guidance line light generating unit 2 in accordance with the embodiment. The unit comprises a laser generating means 4 which is provided in a barrel and mounted in a channel 6. The channel 6 is provided as part of a housing 8 and the channel is angled with respect to the housing such that the laser generating means, when positioned therein, is provided at an angle such that the guidance light which is subsequently generated is generated onto the work piece which is cut using the power tool onto which the guidance light generating means is to be attached.

The channel 6 acts to retain the laser generating means in position by the provision of a cap portion 14 which firstly, protects the laser generating unit from damage and secondly, once the laser generating means is in position in the channel, acts to retain the same in the channel and therefore prevents user access to the laser generating unit 4 once the same has been properly positioned. The cap portion may also include means for altering the line which is generated and may therefore be rotated with respect to the channel to provide different forms of line. Preferably the fitting between the cap 14 and the channel 6 is a tamper evident fitting.

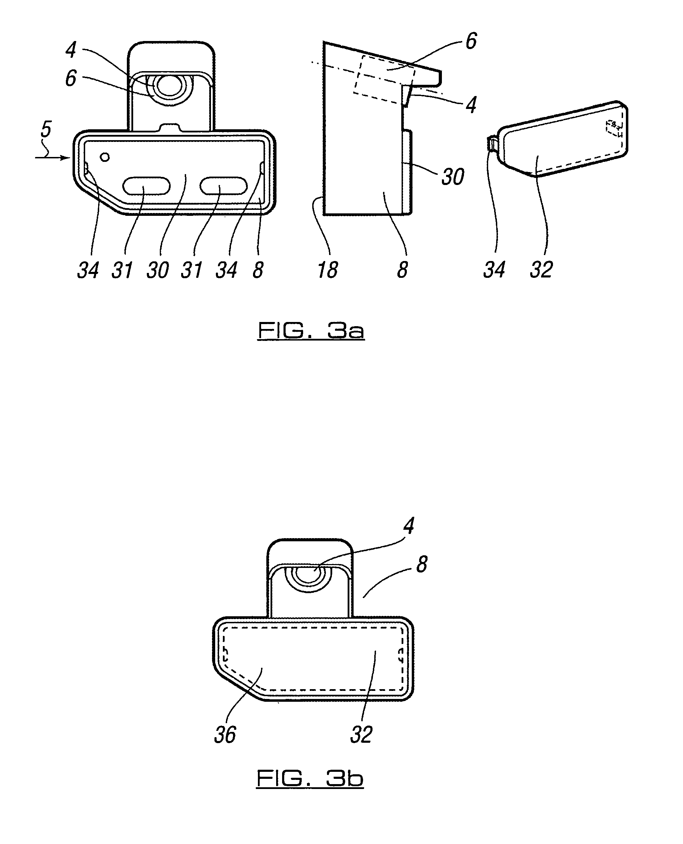

The housing 8 acts to support the unit with respect to a power tool (not shown) and is attached, at the time of manufacture of the power tool at the factory, to the body of the same at a position on the power tool such that the guidance line generated is of particular benefit. For example, with a mitre saw as shown in Figure 3c and d, the unit may be positioned to the rear of the cutting blade 9 to project a guidance line forward to the base 11 and a work piece mounted thereon, and for a jigsaw, the same may be positioned above and to the front of the cutting blade. It will be appreciated that the actual position of the unit in accordance with the invention may vary from product to product.

The housing 8 is positioned on the power tool via apertures at the rear 18 of the housing in which engagement means in the form of screws 20 are provided. The screws pass through apertures 22 provided in the housing rear wall 18 and into the power tool body 24. Once the screws have engaged the housing onto the power tool, the screw heads 26 can be encapsulated in a potting compound 28 thereby preventing further use of the screws. Furthermore, the opening 30 into the housing is closed by the insertion of an enclosure in the form of a plate 32 onto the opening. The plate and/or opening is provided with snap-fit location means 34 such that when the plate is moved into position the same is retained in the position closing the opening. The provision of the snap-fit location means renders the plate engagement tamper evident in that in order to again remove the plate, it will be necessary for the snap-fit location means to be broken.

Alternatively or in addition tamper evidence can be provided by the attachment of a label 36 over the plate 32 and also the area on the housing surrounding the opening into the enclosure. The label can carry information relating to the laser generating means or any other information which is required. The label is provided such that if there is an attempt to remove the plate and gain access to the opening, the label will be required to be torn.

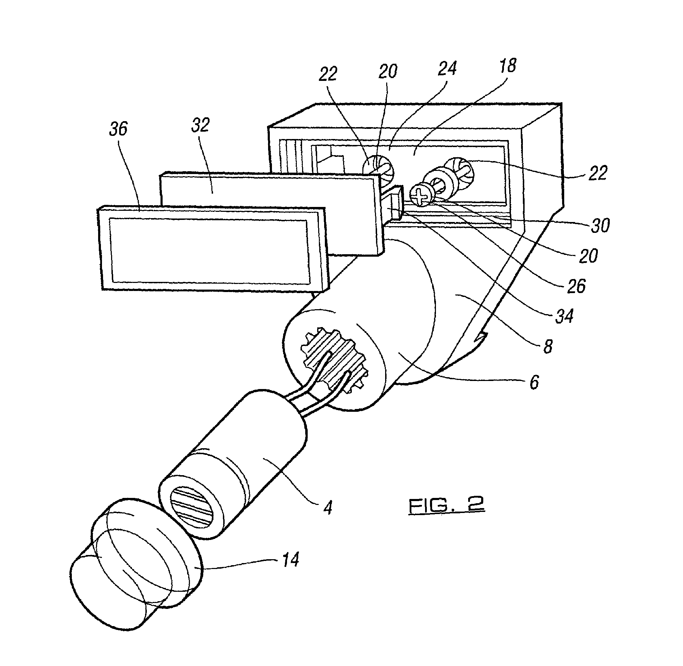

Figures 3a and b illustrate a variation on the embodiment of Figures 1a and 2 and the same reference numerals are used for the same components. There is shown the housing 8 in elevation and side elevation in the direction of arrow 5 and the enclosure in the form of plate 32. The channel 6 is provided to the top of the housing as part of a housing 8 and the channel is angled such that the laser generating means, when positioned therein, is provided at an angle such that the guidance light which is subsequently generated is generated onto the work piece which is cut using the power tool onto which the guidance light generating means is to be attached.

The housing 8 supports the unit with respect to a power tool one type of which, a mitre saw 35 is shown in Figures 3c and d positioned on a portion 37 depending upwardly from the base 39. The housing is attached, at the time of manufacture of the power tool at the factory. It will be appreciated that the actual position of the unit in accordance with the invention may vary from product to product.

The housing 8 is positioned on the power tool via apertures 31 at the rear 18 of the housing in which engagement means in the form of screws (not shown) are provided. The screws pass through apertures 31 provided in the housing rear wall 18 and into the power tool body. Once the screws have engaged the housing onto the power tool, the opening 30 into the housing is closed by the insertion of an enclosure in the form of plate 32 onto the opening. The plate and/or opening is provided with snap-fit location means 34 such that when the plate is moved into position the same is retained in the position closing the opening. The provision of the snap-fit location means can be rendered tamper evident in that in order to again remove the plate, it will be necessary for the snap-fit location means to be broken.

Alternatively or in addition tamper evidence can be provided by the attachment of a label 36 over the plate 32 and also the area on the housing surrounding the opening into the enclosure. The label can be provided such that if there is an attempt to remove the plate and gain access to the opening, the label will be required to be torn.

Figures 3c and d illustrate the unit 2 of Figures 3a and b fitted in position on a mitre saw 35 and positioned on a portion 37 depending upwardly from the base 39 such that the guidance light is generated forwards on to the base and a workpiece (not shown) which is supported on the base and at the fences 41. A cutting head 43 with a blade behind a cover 45 is provided which is pivotally movable between a raised position which is shown and a lowered position in which the circular blade on the cutting head is partially exposed to cut into and through the workpiece. The unit can be positioned such that the guidance line which is generated lies directly in the path of the blade as it enters the workpiece or alternatively to one or other of the sides of the blade as it enters the workpiece. If two laser generating means are provided then they are spaced in the housing so as to allow two spaced lines to be generated onto the workpiece.

In operation and in whichever embodiment, the housing is attached, at the time of manufacture of the power tool at the factory. It will be appreciated that the actual position of the unit in accordance with the invention may vary from product to product. However once the housing is positioned any necessary adjustment of the position of the laser generating means can be undertaken by a skilled operator in the factory. Once the position has been set, the enclosure is then fitted in place to conceal the engagement means for the housing on the body and also normally to conceal the adjustment means for the laser generating means. This therefore ensures that the factory settings can be maintained in subsequent use of the power tool so that optimum performance can be maintained and the user need not alter the settings. Furthermore the user typically cannot alter the location or make adjustments with the unit intact. By intact is meant that the enclosure and housing are located together on the power tool.

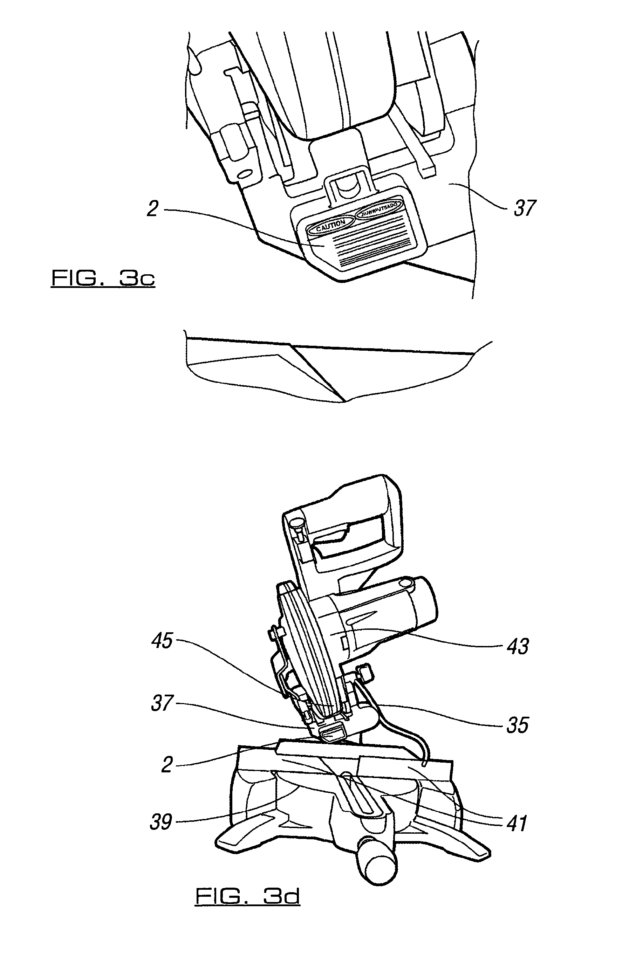

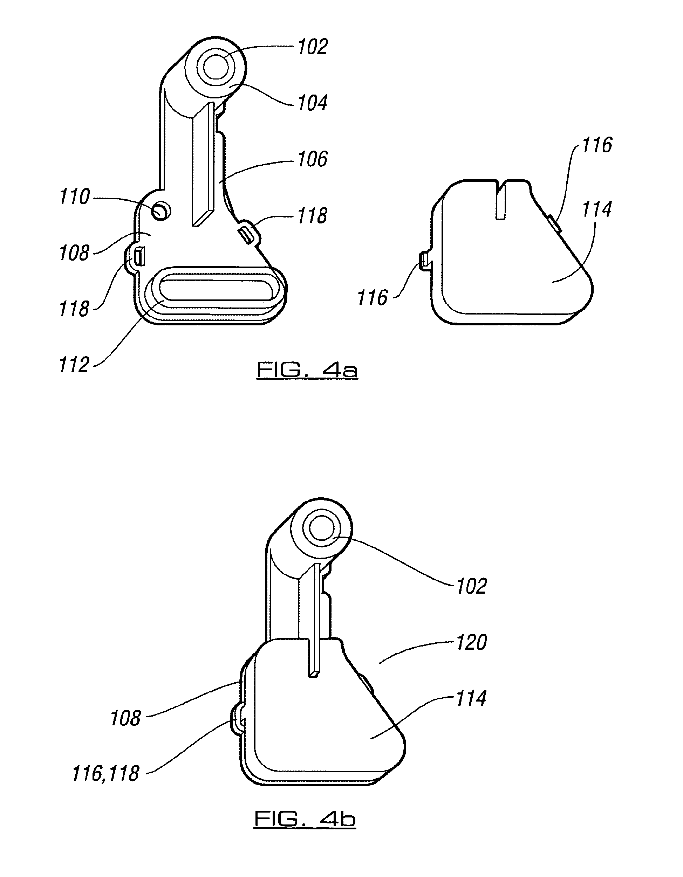

Figures 4a and b illustrate a further embodiment of the invention in which there is provided a further arrangement of a single light generating means 102 provided mounted in a channel 104 on a housing 106. The housing is provided with a lower portion 108 below the channel 104 and this portion includes first and second apertures 110, 112 respectively, and the second of which, 112, is formed as a slot. Each of the apertures 110 and 112, are provided for the reception of an engagement means in the form of a screw therethrough. The screws pass through the housing 106 and into the power tool to which the same is to be attached. The provision of the slot 112 allows adjustment of a position of the housing with respect to the power tool so as to align the light generating means 102 to emit a guidance line onto the work piece, which is in line with the position of the cutting blade of the power tool. An enclosure 114 is provided which has tabs 116 formed at the rear edges of the side walls thereof, said tabs provided to engage in location means 118 formed on the housing. Once the engagement means have been passed through the apertures 110 and 112 to engage the housing onto the power tool, the enclosure 114 is brought into position from the front of the housing to engage over the lower portion 108 of the housing and thereby enclose the engagement means located in the apertures 110 and 112 and thereby prevent access to the same by retention of the tabs 116 in location means 118 so that the formed light generating unit 120 is shown in Figure 4b. Thus, once again, the engagement means are masked and enclosed from access once the light generating unit has been fitted to the power tool.

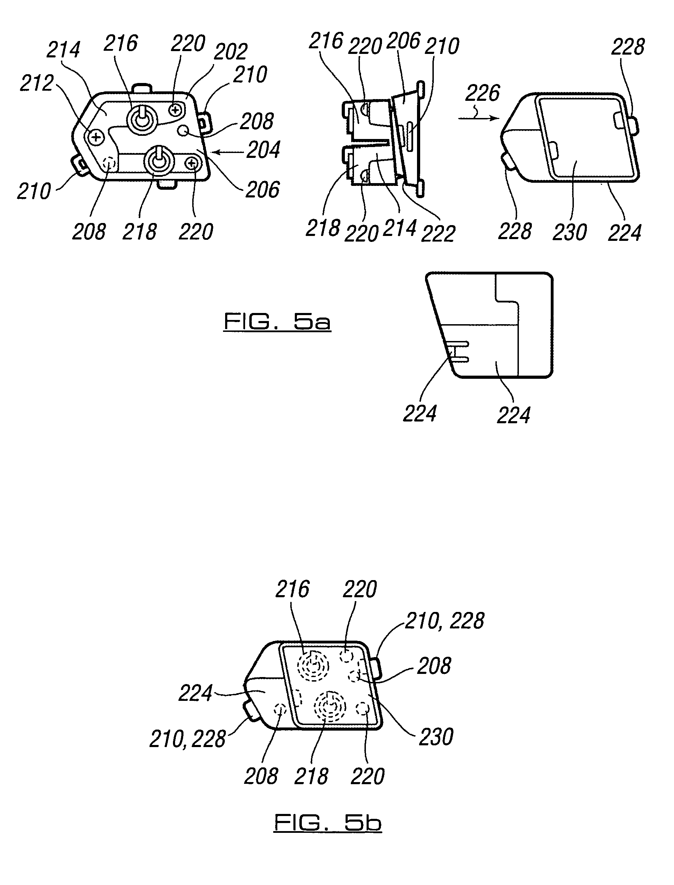

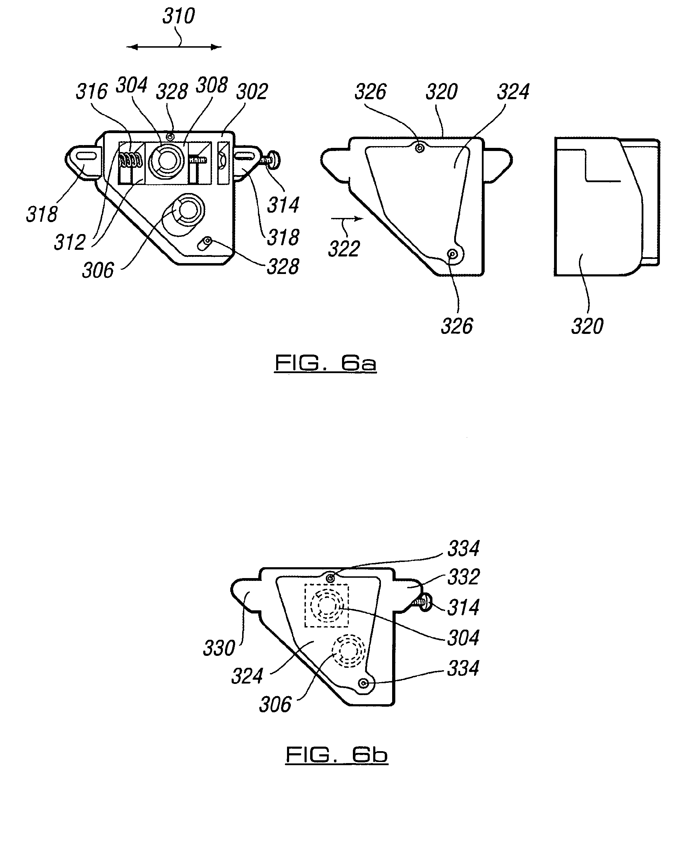

Figures 5a and b and 6a and b illustrate two embodiments of light generating units with two light generating means mounted therein to provide to spaced guidance lines therefrom, typically one line lying on, or to one side, of the cutting blade when the same is in a cutting position on a workpiece and the other lying to the other side of the blade.

In Figure 5a, there is illustrated a housing 202 in plan and also in a side elevation from the direction of arrow 204. The housing 202 comprises a base 206 which is provided with apertures 208 for the reception of engagement means in the form of screws which pass therethrough and serve to engage the base and hence housing onto the power tool. The base also includes first and second location means parts 210, the use of which will be described subsequently. In addition to the base, there is provided a mounted holder, said holder located on the base via screw 212 and the holder 214 has mounted thereon the first and second light generating means 216, 218. Also provided are adjustment means 220 in the form of screws mounted in the holder, the free ends of which pass through the holder and into contact with the front surface 222 of the base. Relative turning of the screws 220 allow the distance and angle of the rear of the holder with respect to the first surface of the base 222 to be adjusted and thereby adjust the angle of the light generating means with respect to the base 206 and with respect to each other so as to provide the required position of the two guidance lines generated from the respective light generating means 216, 218. Also shown in Figure 5a arc front and side elevations of the enclosure 224 with the side elevation in the direction indicated by arrow 226. The enclosure 224 incorporates first and second tabs 228 for engagement in the location means 210 and also includes a window portion which is clear.

Thus, in fitting the light generating unit, the base 206 is first fitted onto the power tool in the required location and then, once fitted, the position of the holder 214 with respect to the base is adjusted using the adjustment means 220. Once the adjustment has been made, the enclosure 224 is placed onto the housing so as to overlie the same with the location means 210, 228 located with respect to each other and thereby mask the engagement means and adjustment means from user contact. Thus, the assembled light generating unit as shown in Figure 5b in which the engagement means 208 are masked, the adjustment means 220 are masked and the light generated from the light generating means 216, 218 passes through the window portion 230 which is typically formed from a clear plastic material. Thus, all of these components are enclosed within the enclosure prior to the power tool and hence the light generating unit leaving the factory and therefore cannot be accessed by the subsequent user.

Figures 6a and b illustrate a further embodiment of the invention in which there is again provided a housing 302 provided with first and second light generating means 304, 306 respectively. In this case, the light generating means 306 is provided within a fixed position on the housing and the light generating means 304 is mounted in a block 308 which is slidably movable as indicated by arrow 310 along a track 312 under the influence of adjustment means 314 in the form of a screw which passes through the external wall of the housing into contact with the block 308 and acts against a biasing means in the form of a spring 316 so as to allow adjustment in the direction 310 and positioning of the block to adjust the position of the light generating means 304 with respect to the light generating means 306. The housing also incorporates slots 318 for the reception of engagement means in the form of screws to allow the housing to be located on the power tool. Also shown in Figure 6a is an enclosure 320 in elevation and side elevation in the direction of arrow 322. The enclosure incorporates a window portion 324 and in this case, the location means for the enclosure on the housing are in the form of apertures 326 in the enclosure 320 and apertures 328 on the housing which are in matching positions, for the reception of screws therethrough so as to screw the enclosure into location with the housing.

Thus, in this arrangement, the housing is first secured onto the power tool using screws passing through the apertures 318 of the housing, said apertures slotted to allow some adjustment of the position of the housing with respect to the blade. Once the housing is in position, the enclosure 320 is positioned over the housing such that the light generating means 304, 306 are viewable through the window 324 as shown in Figure 6b but the apertures 318 are covered over by the protruding portions 330, 332 of the enclosure which overlie the same. The enclosure and housing are then engaged by the insertion of screws 334 into the apertures 326, 328. When this is achieved, the adjustment means 314 which in this case protrudes from the enclosure, can be operated to allow adjustment of the light generating means 304 along the axis 310 to provide the required orientation between the light generating means 304 and 306.

The present invention therefore provides a light generating unit which can be fitted as a separate unit to a power tool at the time of manufacture and can be properly positioned with respect to the power tool cutting blade at the time of manufacture. However, once the unit has been properly positioned and affixed to the power tool, the present invention ensures that the unit is thereafter not adjustable and therefore it can be ensured that the unit is always correctly positioned for use and if, for whatever reason, attempts are made to adjust the position, the same will readily be evident and/or may not be possible without irretrievably damaging the unit and rendering the same unusable.

## Claims

1. A power tool with a guidance line generating unit, said unit including a means for generating at least one light therefrom to project at least one guidance line from said unit, a housing in which said light generating means is located and engagement means for allowing said housing to be fixed onto the power tool in a position such that the guidance line is at or adjacent to a blade of the power tool when positioned on a work piece to be cut and wherein said unit includes an enclosure located on the housing once the unit has been fixed to the power tool during factory assembly said enclosure preventing subsequent user access to the engagement means while the unit is intact.

2. Apparatus according to claim 1 wherein the light generating means is a laser emitter.

3. Apparatus according to claim 2 wherein the light generating means is a barrel shaped component which is held in a channel in the housing.

4. Apparatus according to claim 3 wherein the channel is provided at an angle with respect to the housing such that when the unit is attached to the power tool, the angle at which the guidance line is emitted causes the guidance line to be generated onto the work piece which is to be cut using the power tool.

5. Apparatus according to claim 1 wherein once the engagement means have been used to secure the housing to the power tool, the same arc encapsulated.

6. Apparatus according to claim 1 wherein the enclosure is a plate with location means to locate on the housing.

7. Apparatus according to claim 6 wherein the plate has a label applied thereover to mask the location means.

8. Apparatus according to claim 7 wherein the label is applied to lie over the interface between the edge of the plate and the housing.

9. Apparatus according to claim 1 wherein the enclosure has a front surface and side walls depending therefrom.

10. Apparatus according to claim 9 wherein said side walls have location means formed thereon.

11. Apparatus according to claim 1 wherein the enclosure is provided with snap fit location means.

12. Apparatus according to claim 11 wherein the snap fit arrangement is tamper evident.

13. Apparatus according to claim 1 wherein the housing is provided with a cable port to allow the same to be connected to a power supply via a cable connection passing through said port.

14. Apparatus according to claim 1 wherein the engagement means are provided as a series of screws, each of which passes through an aperture in the housing wall and into the power tool body to secure the housing in position.

15. Apparatus according to claim 14 wherein at least one of the apertures is of a greater dimension in at least one direction than the screw shank so as to allow a degree of movement when the housing is fitted to the power tool.

16. Apparatus according to claim 1 wherein adjustment means are included which allow adjustment of part of the housing of the light generating unit so as to allow adjustment of the position of the light generating means with respect to the remainder of the housing.

17. Apparatus according to claim 16 wherein the housing includes a base and a mounting plate on which the light generating means are mounted, said adjustment means allowing adjustment of the position of the mounting plate with respect to the base.

18. Apparatus according to claim 17 wherein the housing adjustment includes a first screw joining the mounting plate and the base, and at least one further screw mounted in the base or mounting plate for rotation and the free end of said screw abuts the other of the base and mounting plate and rotation of the screw causes relative movement between adjacent portions of the base and mounting plate.

19. Apparatus according to claim 16 wherein a light emitting means is mounted in a block, said block slidable along a track formed in the housing as a result of rotation of a screw which contacts one side of the said block.

20. Apparatus according to claim 19 wherein a resilient means is provided on the opposing side of the block from the screw.

21. A power tool with a guidance line generating unit, said unit fitted to the power tool body in position to allow a guidance line to be generated wherein, once fitted in position, the location means used to engage the unit are masked from user access to prevent adjustment of the position of the unit with the same intact.

22. A light generating unit for generating at least one guidance line said unit including at least one laser generating means for generating at least one laser beam therefrom to project at least one guidance line from said unit, a housing in which said light generating means is located, engagement means for allowing said housing to be fixed onto a power tool and wherein said unit includes an enclosure located on the housing once the unit has been fixed to the power tool to enclose said engagement means within the unit.

23. A light generating unit according to claim 22 wherein the unit includes adjustment means to allow the position of a laser generating means to be adjusted with respect to the housing,

24. A light generating unit according to claim 23 wherein the adjustment means are enclosed within the unit.

25. A light generating unit according to claim 22 wherein the engagement means, once enclosed, are not externally accessible.

26. A light generating unit according to claim 22 wherein two or more laser generating means are provided in the unit to generate to spaced guidance lines from said unit.

27. A method of fitting a light generating unit to a power tool, said method comprising the steps of locating a housing of the unit, which includes one or more light generating means, onto the body of the power tool via engagement means such that the emitted guidance line is at or adjacent to a blade of the power tool when the blade is positioned on the work piece to be cut and wherein once said housing is fitted, attaching an enclosure to the housing to prevent access to the engagement means while the unit is intact on the power tool.

28. A method according to claim 27 wherein the steps arc performed under factory conditions.

29. A method according to claim 27 wherein the steps include using adjustment means to adjust the position of a light generating means with respect to the housing prior to fitting the enclosure to the housing.
